Europäisches Patentamt

European Patent Office

Office européen des brevets

(11) Veröffentlichungsnummer: **0 142 013**
**A2**

(12) # EUROPÄISCHE PATENTANMELDUNG

(21) Anmeldenummer: 84112000.9

(51) Int. Cl.⁴: **G 06 F 12/14,** G 06 F 1/00

(22) Anmeldetag: 06.10.84

(30) Priorität: 14.10.83 AT 3668/83

(43) Veröffentlichungstag der Anmeldung: **22.05.85**
**Patentblatt 85/21**

(84) Benannte Vertragsstaaten: **AT BE CH DE FR GB IT LI LU NL SE**

(71) Anmelder: **Marte, Gerhard, Unter der Bahn 3, A-6840 Götzis/Vlbg. (AT)**

(72) Erfinder: **Marte, Gerhard, Unter der Bahn 3, A-6840 Götzis/Vlbg. (AT)**

(74) Vertreter: **Riebling, Günter, Dr. et al, Patentanwälte Dr.-Ing., Dipl.-Ing., Ing.(grad) Günter Riebling Dr.-Ing., Dipl.-Ing. Peter Riebling Rennerle 10 Postfach 3160, D-8990 Lindau (Bodensee) (DE)**

(54) **Tragbarer Datenträger zur Aufnahme, Speicherung und Wiedergabe von Informationsdaten.**

(57) Ein tragbarer Datenträger (1) wird als verschleissfreier Massenspeicher verwendet und enthält eine Zentraleinheit (9), die von der Ein- und Ausgabe-Einheit (3, 4) erhaltenen Daten mit den Daten einer Echtzeit-Uhr (6) verknüpft und einem Schreib-Lese-Speicher (7) grosser Kapazität einspeichert, wobei der Inhalt des Schreib-Lese-Speichers (7) bei mechanischem Eingriff in den Datenträger zerstört wird.

Ein solcher Datenträger dient im wesentlichen zur Datensicherung, zum Schützen von Soft-Ware gegen Kopieren, zum Schützen von Daten gegen Beschädigungen — gleich welcher Art. Er ist ferner Datenträger für die Datenversorgung von Robotern, CNC-Maschinen, Steuerungen von Vorrichtungen und dergleichen. Er dient ferner zur Datenerfassung in Fahrzeugen, sowie für die produktbegleitende Datenerfassung in Produktionsstrassen und in der OFF-Line-Zeiterfassung von Personal und Maschinen.

-1-

Tragbarer Datenträger zur Aufnahme, Speicherung
und Wiedergabe von Informationsdaten
------------------------------------------------

Die Erfindung betrifft einen tragbaren Datenträger zur
Aufnahme, Speicherung und Wiedergabe von Informationsdaten, bei dem in einem gekapselten , tragbaren Block
eine Stromversorgungseinrichtung, eine von einem Programmspeicher angesteuerte Zentraleinheit und mehrere
extern ein- und auslesbare Datenspeicher angeordnet
sind, wobei die Ein- und Ausgabe der Daten über kontaktlose Übertragungselemente auf eine andere Datenverarbeitungsanlage oder auf einen anderen intelligenten
Datenträger nach der Erfindung erfolgt.

Ein eingangs genannter Datenträger ist beispielsweise
mit der DE-OS 27 38 113 bekannt geworden. Dieser Datenträger dient zur Identifikation seines Benutzers,
sowie zur Manipulation von in einem Rechner gespeicherten Daten, wie z.B. Kontostand, Kontoführung, Abbuchungstag und dergleichen. Ein solcher Datenträger
ist jedoch nicht als tragbarer Massenspeicher verwendbar, der erfindungsgemäss benötigt wird, um Daten
unter extremen Umweltbedingungen sicher auszulesen,
einzulesen oder zu transportieren.

Die Erfindung hat daher die Aufgabe, einen tragbaren
Datenträger der eingangs genannten Art so weiterzubilden, daß er in der Lage ist , an einer anderen
Datenverarbeitungsanlage eine relativ große Menge
von Daten aufzunehmen und diese manipulationssicher,
verschleißfrei und auch unter schwierigen Umgebungsbedingungen speichert und bei Bedarf an eine weitere
stationäre Datenverarbeitungsanlage abgibt.

Zur Lösung der gestellten Aufgabe ist die Erfindung dadurch gekennzeichnet, daß in der Verwendung des Datenträgers als Massenspeicher die Zentraleinheit , die von der Ein- und Ausgabe-Einheit erhaltenen Daten mit den Daten einer Echtzeit-Uhr verknüpft und einem Schreib-Lese-Speicher großer Kapazität einspeichert und daß der Inhalt des Schreib-Lese-Speichers bei mechanischem Eingriff in den Datenträger zerstört wird.

Bisher war nur bekannt, derartige tragbare Datenträger für die Manipulation von Daten in einer stationären Datenverarbeitungsanlage zu verwenden, d.h., der Benutzer soll durch die Bereitstellung seiner Identifikation in die Lage versetzt werden, Zugang zum Rechner zu erhalten, um dann durch Ein- und Ausgabe einer geringfügigen Anzahl von Daten den Datenbestand im Rechner zu manipulieren.

Es sind zwar induktive und optische Datenübertragungen bekannt, dies jedoch nur im Zusammenhang mit feststehenden Einrichtungen, also innerhalb einer Datenverarbeitungsanlage. Es ist jedoch als wesentlicher Fortschritt zu betrachten, sowohl die Stromversorgung als auch die Datenübertragung induktiv oder optisch durchzuführen, und zwar im Zusammenhang mit einer trennbaren Datenübertragungseinrichtung.

Es ist das Verdienst der vorliegenden Erfindung , erkannt zu haben, eine trennbare, induktive Datenkopplung und zugleich eine trennbare Energiekopplung bei einem Datenträger vorzusehen.

Die Einsatzgebiete solcher Datenträger sind selbstverständlich vielseitig. So ist es möglich, einen solchen Datenträger zur Datensicherung heranzuziehen, also zur Sicherung geheimer Daten, zum Schützen von Software gegen Kopieren und zum Schützen von Daten gegen Magnetfelder.

Ferner ist ein solcher Datenträger in geeigneter Weise
für den Datentransport anzuwenden, also zum Übermitteln
von geheimen Daten, zum Transport von Daten unter extremen
Umweltbedingungen und ferner für ein Offline-Leitsystem
oder für ein Offline-Kommandodepot.

Weiters ist ein solcher Datenträger besonders dort nutzbringend einsetzbar, wo eine Offline-Zutrittskontrolle
mit Ort- und Zeiterfassung erwünscht ist. Außerdem ist
der Datenträger für die Datenversorgung von Robotern,
CNC-Maschinen, Steuerungen usw. sowie für die Zeit- und
Datensteuerung von Meß-Stationen einsetzbar.

In gleicher Weise ist ein solcher Datenträger für die
Datenerfassung zu verwenden, also für die Datenerfassung
in Fahrzeugen, sowie für die produktbegleitende Datenerfassung in Produktionsstraßen und in der Offline-
Zeiterfassung von Personal und Maschinen.

Ein beispielhaftes Einsatzgebiet stellt die Verwendung
im Personenverkehr auf öffentlichen Verkehrsmitteln
dar. Beispielsweise werden in Omnibussen Daten gespeichert bezüglich des Fahrkartenverkaufs, der automatischen
Entwertung der Fahrscheine, der Personenfrequenz , der
Fahrtgeschwindigkeit, des Kraftstoffverbrauches, der
Bus-Stop´s und dgl. mehr. Im Kraftfahrzeug (Omnibus)
ist dann ein entsprechendes Gerät lösbar eingebaut,
das vom Fahrer entnommen werden kann, wobei er dann diesen
Datenträger einer zentralen Datenverarbeitungseinrichtung
übergeben kann, die dann die gewünschten Daten aus diesem
Gerät abspielt oder überspielt. Magnetbänder sind dazu
nicht besonders geeignet; sie unterliegen beim bestimmungsgemässen Einsatz zu hohen Temperaturschwankungen.
Ferner gehen mit diesen Geräten ungeschulte Personen um.
Es besteht auch die Gefahr, daß bei Verwendung von Magnet-
bändern diese gelöscht oder anderweitig beschädigt werden.

Bei solchen Datenträgern bedarf es bisher stets einer entsprechenden Steckeinrichtung. Auf Grund der häufigen Beanspruchung dieser Steckeinrichtung ist diese einer baldigen Abnützung unterworfen.

Gerade hier ist der Einsatz des erfindungsgemässen Datenträgers von besonderem Vorteil, da dieser gegen mechanische Beanspruchung robust ist und unabhängig von einer Verschmutzung, von Erschütterungen usw. voll funktionsfähig bleibt. Ein solcher Datenträger kann in einfacher Weise auch von ungeschultem Personal in den erforderlichen Daten- und Leistungskoppler eingesetzt werden.

Andere Einsatzgebiete wurden vorstehend bereits angedeutet, wobei diese Aufzählung sicher nicht vollständig ist.

Wesentlich und wichtig bei der vorliegenden Erfindung ist, daß alle notwendigen Teile für den Datenträger inklusive der kontaktlosen Übertragungselemente in einen gekapselten, tragbaren Block eingebettet sind, und somit eine kontaktlose, funktionssichere Übertragung der für den Betrieb notwendigen Energie und auch der Daten möglich ist.

Als wichtigstes Ausführungsbeispiel wird im folgenden eine Kreditkarte mit Bargeld-Funktion erläutert, wie sie mit einem Datenträger nach der vorliegenden Erfindung realisiert ist.

Von der Bank- oder Kreditkarte von morgen wird im allgemeinen eine Speicherkarte erwartet, die die Daten des Karteninhabers in einem Magnetstreifen oder in einem eingebetteten Mikroprozessor speichert.
Um den Speicherinhalt lesen oder verarbeiten zu können, muß ein elektronisches Terminal bzw. ein Bargeldautomat

-5-

bei der Bank oder eine Supermarktkassa mit Kartenlesevorrichtung im Einzelhandel zur Verfügung stehen.

Es ist abzusehen, daß sich Bank- insbesondere aber
Kreditkarten mit teuren Endterminals für den allgemeinen Zahlungsverkehr nur mit erheblichen Schwierigkeiten durchsetzen lassen.

Das erfindungsgemässe System verlegt die Funktion des
Terminals in die Karte selbst und macht dadurch die
Anschaffung teurer on-line-verbundener Terminals überflüssig.

Auf die erfindungsgemässe Karte wird ein Bargeld- und/
oder Kreditbetrag von der Bank aufgebucht. Nach Eintippen einer persönlichen Kennziffer auf die erfindungsgemässe Karte kann bei jedem Geschäft, welches
über einen erfindungsgemässen Koppler verfügt, ein entsprechender Betrag vollautomatisch abgebucht werden.

Das in der erfindungsgemässen Karte eingebaute Display
ermöglicht dem Benutzer die laufende Kontrolle des
erfindungsgemässen Guthabens bzw. der laufenden Abbuchungen.

Der Geschäftsinhaber kann nach einem frei wählbaren
Zeitintervall die auf "seine" erfindungsgemässe Karte
gebuchten Beträge bei der Bank gutschreiben lassen.

Bei entsprechender Verbreitung kostet ein erfindungsgemässer Ausweis weniger als S 500,-- und ein erfindungsgemässer Koppler weniger als S 2000,--. Preisbedingt lässt sich dadurch eine maximale Netzdichte an Geschäften mit erfindungsgemässen Kopplern realisieren. Nachdem weltweit bereits heute mehr als eine halbe Milliarde Bank- und Kreditkarten, deren Funktion durch die neue erfindungsgemässe Karte ersetzbar ist, in Gebrauch sind, zeichnet sich für die Elektronik-Industrie ein Markt in Taschenrechner-Dimensionen ab.

Hauptargumente für das erfindungsgemässe Karten-System:

totale Fälschungs-Sicherheit
die Karte ist gleichwertig Bargeld
billige End-Terminals
keine ON-Line Verbindungen
Display auf der Karte
kein Problem bei Verlust einer Karte
Bargeld-Zinsgewinn für die Bank
beliebig erweiterbares System

Erfindungsgemäss wird also vorgeschlagen, daß in einem gekapselten, tragbaren Block eine Stromversorgungseinrichtung, eine informationenverarbeitende und speichernde Elektronik sowie kontaktlose Übertragungselemente für die Stromversorgung und den Datenein- und -ausgang eingeschlossen sind, welcher an mit korrespondierenden Übertragungselementen ausgestatteten Datenverarbeitungs- und Datenempfangsanlagen einbringbar bzw. an einen Daten- und Leistungskoppler kontaktlos anschließbar ist.

Durch die vorliegende Erfindung wird also eine trennbare Datenübertragungseinrichtung mit integrierter Stromübertragung geschaffen, die unabhängig von Verschmutzung funktionsfähig ist und in einem relativ großen Temperaturbereich eingesetzt werden kann. Ein solcher Datenträger ist besonders datensicher, da ein Abfragen der Daten beispielsweise nur über einen bestimmten Code

-7-

möglich gemacht werden kann. Da diese Teile in einem gekapselten, tragbaren Block untergebracht sind, sind diese praktisch nur durch vollkommene Zerstörung des Blockes zugänglich, wobei dann selbstverständlich auch die gespeicherten Daten durch diese mechanische Zerstörung verlorengehen. Es ist also ein besonders großer Datenschutz gewährleistet. Besonders wesentlich ist daher der Einsatz der Erfindung als Fahrtenschreiber in Kraftfahrzeugen, wo sicher gestellt sein muß, daß der Fahrer die Daten nicht verfälscht und eine Zerstörung der Daten offensichtlich ist.

Selbstverständlich ist ein derart gekapselter, tragbarer Block praktisch servicefrei, da keine einem Verschleiß unterworfenen Teile nach außen hin offen liegen.

Durch den gekapselten Block ist auch eine mechanische Robustheit gegeben, die einen einwandfreien Einsatz auch bei ständigen Erschütterungen oder in explosionsgefährdeten Bereichen möglich macht. Der Haupteinsatzbereich eines solchen Datenträgers wird also dort liegen, wo Daten unter sehr extremen Umweltbedingungen sicher ausgelesen, eingelesen oder transportiert werden müssen. Selbstverständlich ist ein derartiger Datenträger durch eine relativ kleine handliche Form des Blockes an allen beliebigen Orten einzusetzen und für die verschiedensten Einsatzzwecke zu gebrauchen.

Charakteristik der Erfindung und Vorteile gegenüber dem Stand der Technik:

A. Völlig gekapselter und hermetisch dichter Datenträgerdaher unempfindlich gegen Schmutz und Flüssigkeiten.

B. Durch den Entfall jeglicher Kontaktteile am Datenträger ist eine absolute Zuverlässigkeit der Datenübertragung, bei völliger Verschleißfreiheit, gegeben.

0142013

C. Der integrierte Mikroprozessor mit Echtzeit-Uhr realisiert eine bisher unbekannte "Intelligenz" eines Datenträgers.

D. Durch die "Intelligenz" des Datenträgers kann der Speicher optimal ausgenutzt und gleichzeitig vor Fremdmanipulation geschützt werden.

E. Der erfundene Datenträger ist im Gegensatz zu allen anderen Datenträgern nicht "fremdmanipulierbar" , d.h.: Wer nicht im Besitz des Daten-Zugriffcodes ist, kann die gespeicherten Daten nicht verändern.

F. Ein Einsatz-Temperaturbereich von -40 bis + 70 Grad C wird bisher von keinem anderen Datenträger-System auch nur annähernd erreicht. Dieser hohe Temperaturbereich ist nur deshalb möglich, weil der erfundene Datenträger keine mechanischen Kontakte oder Schreib-Leseköpfe, wie sie z.B. bei Magnetbändern oder Disketten verwendet werden, benötigt.

G. Verschleißfrei - es gibt bislang kein Datenträger-System, welches verschleißfrei arbeitet.

H. Im Gegensatz zu Disketten und Magnet-Bändern ist der erfundene Datenträger weitgehendst unempfindlich gegen magnetische Einflüsse.

I. Der erfundene Datenträger hat einen um ein Mehrfaches schnelleren Daten-Zugriff, als dies bei Magnet-Bändern oder Lochstreifen möglich ist.

J. Der erfundene Datenträger ist im Gegensatz zu Magnet-bändern oder Disketten weitgehendst unempfindlich gegen Stöße, Vibrationen oder andere mechanische Beeinflussungen. Dies sowohl im Betrieb wie auch bei Lagerung.

K. Der erfundene Datenträger hat im Gegensatz zu allen anderen Datenträger-Systemen keinerlei Funkenbildung, wodurch erstmals der Einsatz in explosionsgefährdeten Räumen möglich ist.

Dem erfindungsgemässen System liegt die Idee zugrunde, daß jeder Mitarbeiter "seine" Daten in einem Speichermodul selbst sammelt und bei Arbeitsende dem Computer automatisch übergibt. Dasselbe gilt für die "produktbegleitende" Datenerfassung.

Durch dieses Verfahren entfallen praktisch alle Leitungsverbindungen zu den Daten-Erfassungs-Stellen und die Notwendigkeit des Einsatzes von schnellen Real-Time-Rechnern in Rechner-Verbund-Systemen.

Mit dem erfindungsgemässen System wird dem Computer-Benutzer also erstmals die Möglichkeit gegeben, Daten auf einfachstem Wege mit relativ geringem Aufwand in seinen Computer zu bekommen. Selbst Daten von Fahrzeugen oder außenliegenden Baustellen können auf einfachste Art erfasst werden. Bestehende EDV-Programme und Betriebs-Organisationen müssen nicht verändert werden.

Von besonderer Bedeutung ist die Tatsache, daß der Datenträger hermetisch dicht und gegen Beschädigungen und Manipulationen geschützt ausgebildet ist.

In einem kontaktlosen und hermetisch dichten Gehäuse (z.B. 60 x 100 x 8 mm) ist ein frei programmierbarer Mikro-Computer mit CPU, RAM und RTC untergebracht. Im Prinzip handelt es sich also um einen mobilen, intelligenten Speicher mit integrierter Realzeit, in der Größe eines kleinen Taschenrechners.

Der Zugriff bzw. die Programmierung des Systems erfolgt berührungslos über die beschriebene "Induktiv-Schnittstelle". Auch die erforderliche Energie für den Betrieb der CPU wird induktiv übertragen. Bedingt durch diese Technik kann das Speicher-Element hermetisch dicht und völlig kontaktlos hergestellt werden. Ist das System von der Induktiv-Versorgung getrennt, so übernimmt eine Lithium-Batterie die Stützung des RAM's und den weiteren Betrieb der RTC.

Abgesehen von der berührungslosen Daten- und Stromübertragung liegt der technische Neuheitswert in der Kombination "intelligenter Speicher mit integrierter Echtzeituhr". Daraus ergeben sich primär folgende neue technische Möglichkeiten:

1. Der Datenträger führt eine eigene Systemzeit. Dadurch ist eine zweifelsfreie Protokollierung des Datenzugriffs auf das Speicher-Element bei optimalem Handling gegeben. Im Weiteren entfällt dadurch die Notwendigkeit der Zeit-Synchronisierung bei allen benutzten End-Terminals.

2. Die Zugriffsberechtigung auf den Speicher kann zeitlich programmiert werden.

3. Ein programmierbares Passwort-Timing verhindert den unerlaubten Daten-Zugriff auch bei Rechner-Unterstützung.

4. Die eingebaute Uhr ermöglicht in Verbindung mit einem geladenen Algorithmus die Generierung eines einmaligen dynamischen Codes zur eindeutigen Kennung des Speicherelements. Durch dieses Verfahren ist eine "Einweg-Freund-Feind-Kennung" bei On-Line Datenübertragung (z.B. Home-Banking) erstmals möglich. Der zeitliche Synchronlauf zweier Systeme ist dabei völlig unerheblich , da ein empfangener Code nur auf Plausibilität

-11-

und zeitliche Aufeinanderfolge geprüft werden muss.

Um einen mechanisch/elektrischen Fremdzugriff auf den Speicherinhalt des RAM's zu verhindern, löscht ein Flächen-Sensor die gespeicherten Daten bei jedem beliebigen Eingriffs-Versuch.

Das Koppel-Element für den Speicher ist system-neutral, d.h., es kann an jedes Computer-System mit genormter Schnittstelle angeschlossen werden. Bis auf die Steckverbindung bzw. Kabeldurchführung ist das Koppel-Element gleichfalls hermetisch dicht und unterliegt, wie auch der Speicher selbst, praktisch keinem Verschleiß.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert gezeichnetes Ausführungsbeispiel eines Datenträgers in induktiver Verbindung mit einem Koppler,

0142013

-12-

Figur 2: erstes Ausführungsbeispiel eines Gehäuses für
den Datenträger nach Figur 1,

Figur 3: zweites Ausführungsbeispiel für das Gehäuse,

Figur 4: drittes Ausführungsbeispiel für das Gehäuse,

Figur 5: viertes Ausführungsbeispiel für das Gehäuse,

Figur 6: schematisiert gezeichneter Datenträger mit
Schutz gegen Beschädigung ,

Figur 7: der Datenträger nach Figur 6 in der Seitenansicht schematisiert,

Figur 8: schematisiert gezeichnetes Prinzipschaltbild
der Schaltung des Flächensensors ,

Figur 9: eine weitere Gehäusevariante des Datenträgers .

Figur 10: der Datenträger nach Figur 9 in zerlegtem
Zustand.

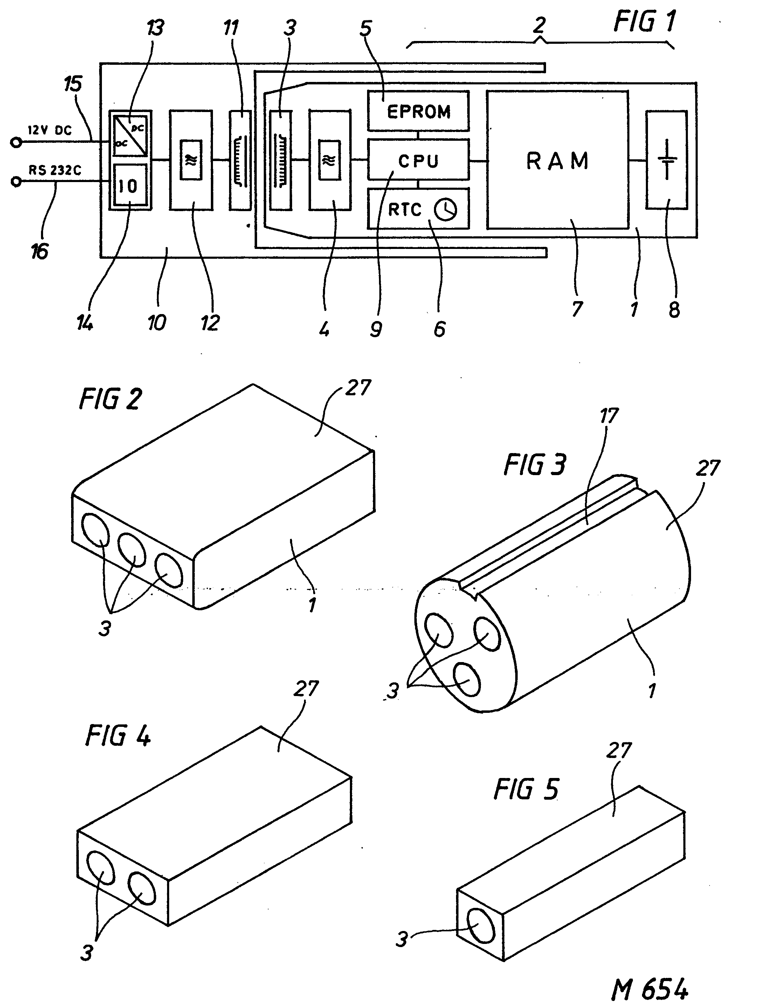

In Figur 1 ist also ein Ausführungsbeispiel eines Datenträgers mit eingezeichnetem Blockschaltbild dargestellt.
Der Datenträger 1 ist als gekapselter, tragbarer Block
ausgebildet, in welchem eine Stromversorgungseinrichtung,
eine informationsverarbeitende und speichernde Elektronik
2 sowie kontaktlose Übertragungselemente 3 eingeschlossen
sind. Die kontaktlosen Übertragungselemente 3 sind in
Form von Spulenkörpern ausgebildet, so daß eine induktive
Übertragung für die Stromversorgung und für den Datenein- und Datenausgang möglich ist. Ferner ist beim gezeigten Ausführungsbeispiel ein Oszillator 4 eingesetzt.
Die die Informationen verarbeitende und speichernde
Elektronik 2 wird von einem Programmspeicher 5, einem
Mikroprozessor 9, einem elektronischen Schreib-Lese- Speicher 7 sowie einer Batterie 8 gebildet. In diese Elektronik integriert ist ferner eine elektronische Uhr 6 mit Kalenderangabe. Die Batterie 8 ist nur dann notwendig, wenn ein Schreib-Lese-Speicher verwendet wird, der eine Batterie-Pufferung benötigt und/oder eine elektronische Uhr verwendet wird.

In Figur 1 ist auch der zum Datenträger 1 passende Daten- und Leistungskoppler 10 gezeigt,welcher für die Stromversorgung und für die Übergabe bzw. Übernahme der Daten vom Datenträger 1 ausgeführt ist. Dieser Daten- und Leistungskoppler ist in korrespondierender Weise mit kontaktlosen Übertragungselementen 11, also mit einem oder mehreren entsprechenden Spulenkörpern, ausgeführt. Auch hier ist ein Oszillator 12 vorgesehen. Weiters ist ein Netzteil 13 und eine Schnittstellenelektronik 14 vorgesehen. Von diesem Daten- und Leistungskoppler 10 führen Anschlußleitungen 15 und 16 weg, die einerseits zur Stromversorgung dienen und andererseits die Datenleistung darstellen. Über diese Verbindungsleitungen 15,16 ist der Daten- und Leistungskoppler 10 mit der entsprechenden Datenverarbeitungs- und Datenempfangsanlage verbunden. Die kontaktlose Übertragung für die Stromversorgung und den Datenein- und ausgang wird also durch die Übertragungselemente 3 besorgt, welche auf induktiver Basis arbeiten. Es sind dadurch keine Steckkontakte notwendig und demnach ergeben sich keine Verschleißerscheinungen und auch keine Probleme mit der Kontaktgabe selbst bei großen Temperaturunterschieden oder bei Verschmutzungen.

Durch eine induktive Datenübertragung zwischen dem Daten- und Leistungskoppler (Adapter) und dem Datenträger 1 (Speicher-Pocket) ist eine völlig hermetische Kapselung und Trennung der beiden Elemente gegeben.

Der Haupteinsatzbereich eines solchen Datenträgers 1 liegt

-14-

dort, wo Daten unter sehr extremen Umweltbedingungen sicher ausgelesen , eingelesen oder transportiert werden müssen.

Der direkt in den Speicher integrierte Mikroprozessor ermöglicht sowohl eine intelligente Speicherausnutzung als auch einen problemlosen Schutz des Speicherinhalts durch individuelle Soft-Codes. Die Kombination von Zeit- und Code-Programmierung macht den Datenträger zu einem exzellent sicheren und nicht fremd manipulierbaren Datenträger. Durch eine genormte Schnittstelle ist der Anschluß an jeden modernen Personal- oder Hand-Held-Computer gewährleistet.

Gerade im Hinblick auf die Verschmutzungsgefahr, auf die schwankende Temperatur und sonstige Umwelteinflüsse ist es wesentlich, wenn sowohl die Stromversorgung als auch der Datenein- und -ausgang über induktive Über- -ragungselemente 3 bzw. 11 erfolgt. Es ist jedoch auch denkbar, daß lediglich die Stromversorgung über induktive Übertragungselemente gekoppelt und die Datenübertragung auf optischem Wege durchgeführt wird.

Die induktiven Übertragungselemente 3 und auch entsprechend die Übertragungselemente 11 können in regelmässiger oder unregelmässiger Aufeinanderfolge im Datenträger 1 angeordnet werden, wobei lediglich immer die entsprechenden Übertragungselemente 3 des Datenträgers 1 und die Übertragungselemente 11 des Kopplers 10 exakt übereinstimmen müssen. Es wird deshalb auch zweckmässig sein, wenn alle Übertragungselemente 3 einer gemeinsamen Begrenzungsseite des von einem Block gebildeten Datenträgers angeordnet sind. Es wäre aber auch denkbar, die Übertragungselemente 3 für die Stromversorgung beispielsweise einer anderen Seitenbegrenzung des Datenträgers 1 zuzuordnen als die Übertragungselemente für die Datenübertragung.Bei den Ausführungsbeispielen nach den Fig. 2 und 3 sind jeweils drei Übertragungselemente 3 vorgesehen, die hier als Spulenkörper zur induktiven Übertragung der Stromversorgung und der Daten ausgeführt sind. Es ist auch ersichtlich, daß der Datenträger 1 selbstverständlich verschiedene äußere Formgebungen aufweisen kann, so daß dieser Datenträger 1 entsprechend handlich und somit leicht transportierbar ausgeführt werden kann. Insbesondere bei anderen als rechteckigen Ausführungsformen können an der Oberfläche des den Datenträger 1 bildenden Block Vorsprünge, Vertiefungen, Rippen, Rillen 17 od. dgl. vorgesehen sein, welche zu entsprechenden Vertiefungen, Vorsprüngen, Rillen, Rippen od. dgl. an der Datenverarbeitungs- und Datenempfangsanlage bzw. an dem Daten- und Leistungskoppler 10 zur richtigen Positionierung korrespondierend ausgeführt sind.

Bei der Ausführung nach Fig. 4 sind lediglich zwei Übertragungselemente 3 vorgesehen, wobei das eine Übertragungselement für die Stromversorgung und das andere Übertragungselement für den Datenein- und den Datenausgang vorgesehen sind. Es ist möglich, gemäss Fig. 5 lediglich ein Übertragungselement 3 vorzusehen, wobei dieses ebenfalls als Spulenkörper ausgebildet ist. Hier wird durch ein einziges Übertragungselement 3 sowohl eine induktive Übertragung der Stromversorgung als auch des Datenein- und Datenausganges besorgt. Dies kann beispielsweise dadurch erfolgen, daß die Stromversorgung, der Datenein- und der Datenausgang auf verschiedenen Frequenzbereichen desselben Übertragungselementes 3 arbeiten.

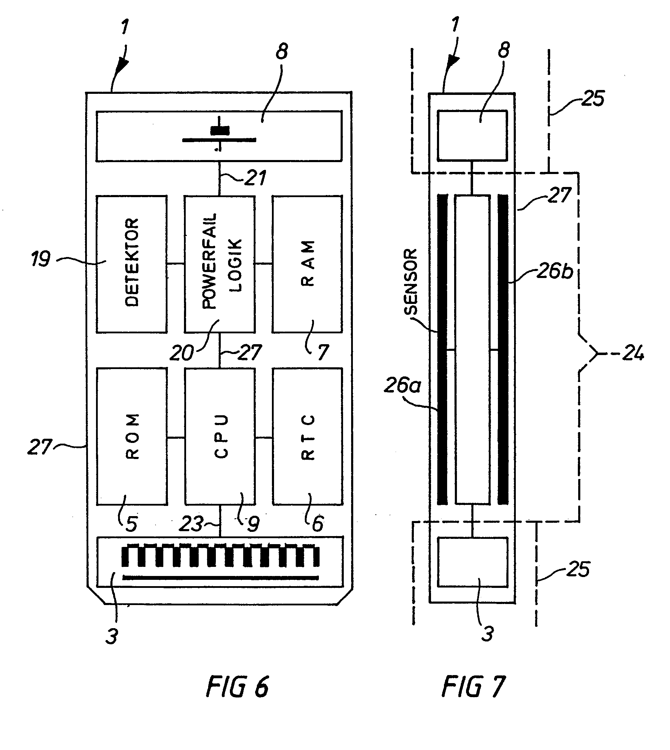

Bei dem in Fig. 6 gezeigten Datenträger 1 liegt die Besonderheit darin, daß er aus einem geschützten Bereich 24 und aus einem ungeschützten Bereich 25 besteht.

Es ist selbstverständlich möglich, den geschützten Bereich 24 über das gesamte Gehäuse 27 des Datenträgers 1 zu erstrecken.

Im vorliegenden Fall wurde jedoch davon abgesehen, so daß die Batterie 8 und die kontaktlosen Übertragungselemente 3, die als induktive Spulen ausgeführt sind, im umgeschützten Bereich 25 liegen.

Der Schutz des Schreib-Lese-Speichers 7 im geschützten Bereich 24 erfolgt dadurch, daß das Gehäuse 27 an sämtlichen Seiten von jeweils einem Flächensensor 26 umgeben ist und die Flächen-Sensoren aller Seiten in Serie geschaltet sind.

Es wird hierbei besonders bevorzugt, wenn der Flächensensor 26 als Serienschaltung von Dehnungsmeßstreifen (DMS) ausgebildet ist, weil hier eine besonders einfache und kostengünstige Realisierung eines solchen Flächensensors gewährleistet ist, der schon bei Durchbiegung des Gehäuses anspricht. Statt der Ausbildung als Dehnungsmeßstreifen sind jedoch noch andere Ausführungsvarianten möglich. Wichtig ist nur, daß bei mechanischer Beschädigung des Flächensensors 26 ein Detektor 19 angesteuert wird, welcher seinerseits auf eine Netzausfall-Logik 20 wirkt, die ihrerseits auf den Schreib-Lese-Speicher 7 geschaltet ist. Eine weitere bevorzugte Ausführungsform besteht darin, daß auf einer Folie eine Vielzahl von mäanderförmig verlaufenden Leiterbahnen aufgebracht ist, und der geschützte Bereich von der Folie abgedeckt ist. Bei Untersuchung einer Leiterbahn wird die Stromversorgung zum RAM unterbrochen. Sobald der Detektor eine Beschädigung des Gehäuses 27 des Datenträgers 1 feststellt, wird die Stromzufuhr zum Schreib-Lese-Speicher unterbrochen, so daß alle Speicherzellen dieses Speichers 7 ihren eingespeisten Wert verlieren. Gleiches gilt selbstverständlich,wenn die Batterie 8 beschädigt wird, die über die Leitung 21 mit der Netzausfall-Logik 20 verbunden ist.

Ebenso würde der Mikroprozessor 9 über die Leitung 22 die Netzausfall-Logik 20 ansteuern und den Schreib-Lese-Speicher 7 zerstören, wenn ein entsprechender Soft-Ware-Befehl gegeben wird.

Der Mikroprozessor 9 steht hierbei über die Leitung 23 mit dem kontaktlosen Übertragungselement 3 in Verbindung.

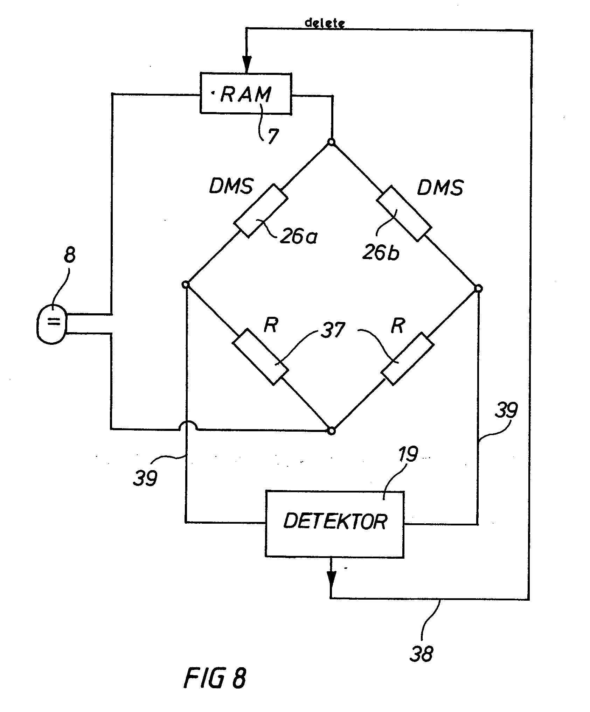

Gemäss dem schematisiert gezeichneten Blockschaltbild in Figur 8 ist der in Figur 7 lediglich an den Breitseiten dargestellte Flächensensor 26 gruppenweise so zusammengeschaltet, daß der an der Oberseite angebrachte Flächensensor 26a im einen Brückenzweig liegt, während der an der Unterseite des Gehäuses 27 angebrachte Flächensensor 26b im benachbarten Brückenzweig eingeschaltet ist.

In der einen Brückendiagonale liegt die Batterie 8 in Serie mit der Spannungsversorgung des Schreib-Lese-Speichers 7, während in der gegenüberliegenden Brückendiagonale der Detektor 19 liegt, welcher über die Leitung 38 den Speicher-Lösch-Befehl auf den Schreib-Lese-Speicher 7 gibt, wenn er entsprechend angesteuert wird.

In den übrigen Brückenzweigen liegen feste Widerstände 37.

Sobald bereits schon das Gehäuse 27 verbogen wird, wird der an der Oberseite liegende Flächensensor 26a anders gedehnt, als der an der Unterseite liegende Flächensensor 26b , so daß die in Fig. 8 dargestellte Brückendiagonale der Wheatstoneschen Brücke aus dem Gleichgewicht gerät und über die Leitung 39 den Detektor 19 ansteuert, der seinerseits über die Leitung 38 den Löschbefehl auf den Schreib-Lese-Speicher 7 gibt.

-18-

Erst recht wird eine Zerstörung des Schreib-Lese-Speichers vollzogen , wenn einer der Flächensensoren 26a, 26b durch irgendeine mechanische Beschädigung in seiner Leitungsverbindung unterbrochen wird.

In einer anderen ,nicht näher zeichnerisch dargestellten Ausführungsform ist es möglich, die als DMS ausgebildeten Flächensensoren 26 unmittelbar in Serie mit der Spannungsversorgung des Schreib-Lese-Speichers 7 zu schalten, so daß bei einer Unterbrechung des Strompfades der DMS sofort der Schreib-Lese-Speicher wegen Wegfall der Versorgungsspannung auf Null zurückfällt.

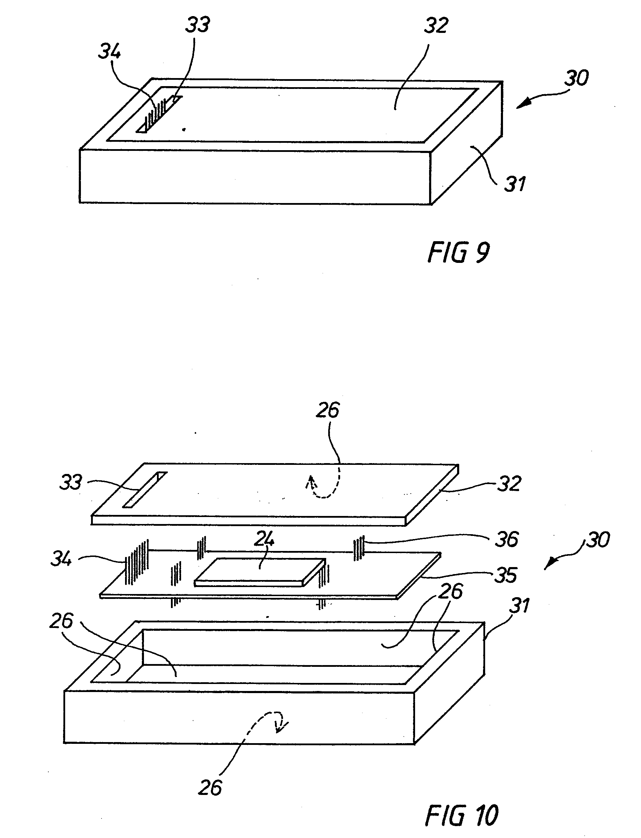

Bei dem in den Fig. 9 und 10 dargestellten Datenträger 30 handelt es sich wiederum um einen hermetisch dichten Datenträger, der durch an den Innenseiten angebrachte Flächensensoren 26 vollständig gegen Beschädigungen geschützt ist. Die Flächensensoren sind sowohl sämtliche an den Innenseiten der Gehäuseschachtel 31 als auch an der Innenseite des Gehäusedeckels 32 angebracht. Um eine Zusammenschaltung dieser Flächensensoren 26 zu erreichen, sind auf der Printplatte 35 , welche den geschützten Bereich 24 der Elektronik nach Figur 6 und 7 enthält, entsprechende Kontaktstifte 36 angebracht, welche sowohl mit den Flächensensoren 26 an den Innenseiten des Gehäusedeckels 32 als auch mit den übrigen Flächensensoren in der Gehäuseschachtel 31 in Verbindung stehen.

Sofort , wenn der Gehäusedeckel 32 abgenommen wird, wird die Serienschaltung sämtlicher Flächensensoren 26 untereinander unterbrochen, und gemäss dem Blockschaltbild in Figur 8 wird der Detektor 19 einen Löschbefehl über die Leitung 38 auf den Schreib-Lese-Speicher 7 geben.

Als Ausführungsvariante ist eine Kontaktierung der Print-

-19-

platte 35 über eine Steckerleiste 34 vorgesehen, welche durch einen zugeordneten Schlitz 33 im Gehäusedeckel 32 greift und von außen her durch eine nicht näher dargestellte Buchse kontaktierbar ist.

Statt der softwaremässigen Erzeugung eines Löschbefehls ist es gemäss der Erfindung in einer weiteren Ausführung vorgesehen, daß durch mechanische Zerstörung der Dehnungsmeßstreifen die Versorgungsspannung von RAM unterbrochen wird, wodurch der Speicher seinen eingespeicherten Inhalt verliert. Für diesen Fall könnte die Brückenschaltung nach Fig. 8 entfallen und die Dehnungsmeßstreifen in Serie mit der Versorgungsspannung des RAM geschaltet sein.

P a t e n t a n s p r ü c h e
―――――――――――――――――

1. Tragbarer Datenträger zur Aufnahme, Speicherung und
Wiedergabe von Informationsdaten, bei dem in einem gekapselten tragbaren Block eine Stromversorgungseinrichtung,
eine von einem Programmspeicher angesteuerte Zentraleinheit
und mehrere extern ein- und auslesbare Datenspeicher angeordnet sind, wobei die Ein- und Ausgabe der Daten über
kontaktlose Übertragungselemente auf eine stationäre Datenverarbeitungsanlage erfolgt, d a d u r c h
g e k e n n z e i c h n e t , daß in der Verwendung des
Datenträgers (1,30) als Massenspeicher die Zentraleinheit
(9) die von der Ein- und Ausgabe-Einheit (3,4) erhaltenen
Daten mit den Daten einer Echtzeit-Uhr (6) verknüpft
und einem Schreib-Lese-Speicher (7) großer Kapazität
einspeichert, und daß der Inhalt des Schreib-Lese-Speichers
(7 ) bei mechanischem Eingriff in den Datenträger (1,30)
zerstört wird.

2. Datenträger nach Anspruch 1, d a d u r c h
g e k e n n z e i c h n e t , daß das Gehäuse (27,31,32)
des Datenträgers (1,30) hermetisch dicht ist und allseitig
von einem Flächensensor (27) umgeben ist, dessen Zerstörung
einen Detektor (19) ansteuert, der seinerseits den Schreib-
Lese-Speicher (7) löscht.

3. Datenträger nach Anspruch 2, d a d u r c h
g e k e n n z e i c h n e t, daß der Flächensensor (27)
als Vielzahl von in Serie geschalteten Dehnungsmeßstreifen
(26) ausgebildet ist.

4. Datenträger nach Anspruch 3, d a d u r c h
g e k e n n z e i c h n e t , daß die Dehnungsmeßstreifen
(26) in zwei Gruppen (26a, 26b) aufgeteilt sind, die in
zwei benachbarten Zweigen einer Wheatstoneschen Brückenschaltung zusammengeschaltet sind, daß in der einen Brückendiagonalen der Detektor (19) sitzt, welcher über eine Leitung (38) einen Löschbefehl auf den Schreib-Lese-Speicher (7) gibt, und daß in der anderen Brückendiagonalen der Schreib-Lesespeicher (7) mit seiner Versorgungsspannung an die Batterie (8) angeschlossen ist, (Fig. 8).

5. Datenträger nach Anspruch 2 und Anspruch 5, d a d u r c h   g e k e n n z e i c h n e t , daß das Gehäuse des Datenträgers (30) aus einer einseitig offenen Gehäuseschachtel (31) besteht, deren Öffnung von einem Gehäusedeckel (32) abgedeckt ist, daß an den Innenseiten der Gehäuseschachtel (31) in Serie geschaltete Flächensensoren (26) angeordnet sind, welche mit den an der Innenseite des Gehäusedeckels (32) angeordneten Flächensensoren (26) über Kontaktstifte (36) in elektrischer Verbindung stehen, (Fig. 9,10).

6. Datenträger nach Anspruch 5, d a d u r c h   g e k e n n z e i c h n e t , daß die Flächensensoren (26) der Gehäuseschachtel (31) gleichfalls über Kontaktstifte (36) einer geschützt in das Gehäuse (31,32) eingesetzten Printplatte (35) in elektrischer Verbindung stehen.

7. Datenträger nach Anspruch 6, d a d u r c h   g e k e n n z e i c h n e t , daß auf der Printplatte (35) eine Steckerleiste (34) angeordnet ist, welche durch einen Schlitz (33) des Gehäusedeckels (32) ragt, (Fig. 9).

0142013

ZEICHNUNGS-LEGENDE

1 Datenträger
2 Elektronik
3 kontaktlose Übertragungselemente

4 Oszillator
5 Programmspeicher
6 elektronische Uhr
7 Schreib-Lese-Speicher
8 Batterie
9 Mikroprozessor
10 Daten- u. Leistungskoppler
11 kontaktloses Übertragungselement
12 Oszillator
13 Netzteil
14 Schnittstellen-Elektronik
15 Verbindungsleitung
16 Verbindungsleitung
17 Rillen
18
19 Detektor
20 Netzausfall-Logik
21 Leitung
22 Leitung
23 Leitung
24 geschützter Bereich
25 ungeschützter Bereich
26 Flächensensor
27 Gehäuse

30 Datenträger

31 Gehäuseschachtel
32 Gehäusedeckel
33 Schlitz

34 Steckerleiste
35 Printplatte
36 Kontaktstift
37 Widerstand
38 Leitung
39 Leitung

FIG 1

FIG 2

FIG 3

FIG 4

FIG 5

M 654

FIG 6

FIG 7

M 654

**FIG 8**

M 654

FIG 9

FIG 10